(19) **Europäisches Patentamt / European Patent Office / Office européen des brevets**

(11) **EP 2 891 640 A1**

(12) **EUROPEAN PATENT APPLICATION**
published in accordance with Art. 153(4) EPC

(43) Date of publication:
08.07.2015 Bulletin 2015/28

(51) Int Cl.:
*C04B 35/599* (2006.01)   *F16C 33/24* (2006.01)

(21) Application number: 13810014.4

(22) Date of filing: 27.06.2013

(86) International application number:
PCT/JP2013/067738

(87) International publication number:
WO 2014/003150 (03.01.2014 Gazette 2014/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.06.2012   JP 2012144361

(71) Applicant: Kyocera Corporation
Kyoto-shi, Kyoto 612-8501 (JP)

(72) Inventors:
• ODA,Takehiro
  Kyoto-shi
  Kyoto 612-8501 (JP)

• IIDA,Mami
  Kyoto-shi
  Kyoto 612-8501 (JP)
• TATEYAMA,Yasuharu
  Kyoto-shi
  Kyoto 612-8501 (JP)
• HIRANO,Yoshinori
  Kyoto-shi
  Kyoto 612-8501 (JP)
• ISHIKAWA,Kazuhiro
  Kyoto-shi
  Kyoto 612-8501 (JP)

(74) Representative: Viering, Jentschura & Partner
Patent- und Rechtsanwälte
Grillparzerstrasse 14
81675 München (DE)

(54) **SIALON SINTERED BODY AND WEAR-RESISTANT COMPONENT USING SAME**

(57)    [Object] To provide a sialon sintered compact having a high hardness and a wear-resistant component made of the sintered compact.

[Solution] A sialon sintered compact includes a main phase made of $\alpha$-sialon, and a sub phase made of $\beta$-sialon. The molar concentration of aluminum in the $\beta$-sialon is higher than the molar concentration of aluminum in the $\alpha$-sialon. Such a sialon sintered compact can exhibit high strength. A wear-resistant component made of the sialon sintered compact exhibits a high hardness, and accordingly has high reliability.

Fig.1( a )

EP 2 891 640 A1

Fig.1( b )

COMPRESSIVE FORCE F

2 a

2

1

3

COMPRESSIVE FORCE F

**Description**

Technical Field

The present invention relates to a sialon sintered compact and a wear-resistant component made of the sialon sintered compact.

Background Art

Sialon sintered compacts have good mechanical properties and are accordingly used as structural ceramics.

PTL 1 discloses a high-strength sialon-based sintered compact as such a sialon sintered compacts having good mechanical properties. This sialon-based sintered compact includes $\alpha$-silicon nitride crystals, Y$\alpha$-sialon crystals expressed by the formula Y$_X$(Si, Al)$_{12}$(O, N)$_{16}$ (wherein x represents a numeral of 0.3 to 2), $\beta$-sialon crystals expressed by the formula Si$_{6-Z}$Al$_Z$O$_Z$N$_{8-Z}$ (wherein z represents a numeral satisfying $0 < z \leq 4.2$), and glass phases containing Y.

Citation List

Patent Literature

PTL 1: Japanese Unexamined Patent Application Publication No. 2-233560

Summary of Invention

Technical Problem

In recent years, however, sialon sintered compacts having higher strength than the high-strength sialon-based sintered compact disclosed in PTL 1 have been desired.

The present invention is intended to solve this issue, and the object of the invention is to provide a sialon sintered compact having still higher hardness and a wear-resistant component made of the sialon sintered compact.

Solution to Problem

A sialon sintered compact of the present invention includes a main phase made of $\alpha$-sialon, and a sub phase made of $\beta$-sialon. The molar concentration of aluminum in the $\beta$-sialon is higher than the molar concentration of aluminum in the $\alpha$-sialon.

A wear-resistant component of the present invention is made of the above-described sialon sintered compact. Advantageous Effects of Invention

The sialon sintered compact of the present invention exhibits a high hardness.

Since the wear-resistant component of the present invention is made of the above-described sialon sintered compact, the component is unlikely to wear and can have a long life.

Brief Description of Drawing

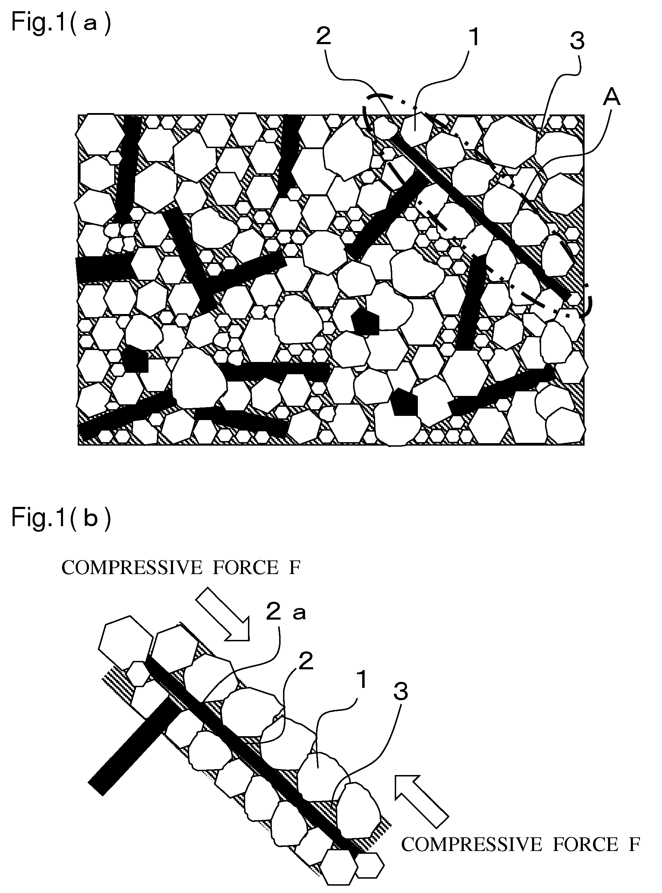

Fig. 1 shows an exemplary section of a sialon sintered compact of an embodiment of the invention: (a) is a schematic view of the section; and (b) is an enlarged view of portion A.

Description of Embodiments

An embodiment of the present invention will now be described with reference to the drawing.

Fig. 1 shows an exemplary section of a sialon sintered compact of an embodiment of the invention: (a) is a schematic view of the section; and (b) is an enlarged view of portion A.

The sialon sintered compact of the present embodiment contains crystal grains 1 that are $\alpha$-sialon granular grains forming main phases, crystal grains 2 that are $\beta$-sialon columnar grains forming sub phases, as shown in Fig. 1. The sialon sintered compact may further contain nitrogen, oxygen, aluminum, silicon or yttrium in grain boundary phases 3 formed between the crystal grains 1 and between the crystal grains 1 and the crystal grains 2, but need not necessarily have the grain boundary phases 3.

The sialon sintered compact may contain inevitable impurities, for example, 0.5% by mass or less of an impurity relative to 100% by mass thereof.

The sialon sintered compact of the present embodiment includes main phases made of α-sialon, and sub phases made of β-sialon. The molar concentration of aluminum in the β-sialon is higher than that in the α-sialon.

A sialon sintered compact which includes main phases made of α-sialon and sub phases made of β-sialon and in which the molar concentration of aluminum in the β-sialon is higher than that in the α-sialon can have a high hardness.

This is because α-sialon has high covalent character. Accordingly, crystal grains 1 of the α-sialon have high hardness, and thus high-hardness α-sialon is present as the main phases in the sialon sintered compact.

In addition, β-sialon crystal grains 2 have high ion bonding property and a high linear expansion coefficient.

In a process for producing a sialon sintered compact in which the molar concentration of aluminum in the β-sialon is higher than that in the α-sialon, when the material is cooled after being sintered, the β-sialon crystal grains 2 shrink considerably in the longitudinal direction thereof. By this shrinkage, a compressive force F is placed on the α-sialon crystal grains 1 in contact with the surfaces 2a at the ends in the width direction of the β-sialon crystal grains 2, as shown in Fig. 1(b). This can also increase the hardness.

The change in ion bonding property of a sialon depending on the molar concentration of aluminum in the sialon can be estimated by Pauling's ion bonding equation (1) shown below.

Sialons including α-sialon and β-sialon are compounds of solid solutions of $Si_3N_4$ in which part of the Si element is substituted with Al and part of the N element is substituted with O. Since the Al element has a lower electronegativity than the Si element, it is estimated from equation (1) that the ion bonding properties of the Al-O bond and the Al-N bond are each higher than those of the Si-O bond and the Si-N bond. In other words, the proportions of the Al-O and Al-N bonds depend on the molar concentration of aluminum in sialon, and the ion bonding properties in the sialon vary, accordingly.

(Al element electronegativity: 1.5; Si element electronegativity: 1.8; O element electronegativity: 3.5; N element electronegativity: 3.0)

$$P_{AB} = 1 - \exp\{-1/4 \times (\chi_A - \chi_B)^2\}$$

$$(1)$$

$\chi_A$, $\chi_B$: electronegativities of elements A and B, respectively $P_{AB}$: ion bonding property of an A-B bond

In this instance, the α-sialon and the β-sialon can be identified with an X-ray diffraction analyzer (XRD). Also, the molar concentrations of aluminum in the α-sialon and the β-sialon can be calculated using the compositional formula determined by the Rietveld method, or, alternatively, may be quantified using an electron probe microanalyzer (EPMA) or a transmission electron microscope (TEM).

In the sialon sintered compact of the present embodiment, the molar concentration of aluminum in the β-sialon is preferably 1.3 times or more that in the α-sialon.

In this composition, the difference in linear expansion coefficient between the α-sialon crystal grains 1 and the β-sialon crystal grains 2 increases. Accordingly, the compressive force F increases to further increase the hardness of the sialon sintered compact. In addition, when the molar concentration of aluminum in the β-sialon is 1.5 times or more that in the α-sialon, the hardness can be further increased.

In the sialon sintered compact of the present embodiment, the α-sialon preferably contains 5% to 10% by mole of aluminum. When the main phases made of α-sialon contain 5% to 10% by mole of aluminum, the covalent character is increased without reducing the ion bonding properties, and the hardness of the sialon sintered compact is increased, accordingly.

In the sialon sintered compact of the present embodiment, a rare-earth element or calcium is dissolved in the main phases, and preferably, the main phases contain 1% to 3% by mole of a rare-earth element or calcium. In this instance, when the material is sintered at a high temperature and is then cooled to room temperature, a compressive force resulting from the rare-earth element or calcium is placed on the α-sialon crystal grains 1. These crystal grains 1 are therefore unlikely to be shattered, thus increasing wear resistance. Also, the ion bonding property of the α-sialon is reduced, that is, the covalent character is increased. Consequently, the resulting sialon sintered compact can exhibit still higher hardness. It can be checked through a transmission electron microscope (TEM) whether or not a rare-earth element or calcium is dissolved in the main phase.

When α-sialon forms the main phases of a sintered compact, the main phases account for 50% or more of the area of a predetermined region of the sintered compact in sectional view. The preferred proportion of the main phases is in the range of 60% to 90% in area. When the area of the main phases accounts for a proportion in such a range, the proportions of α-sialon crystal grains 1 having high covalent character and β-sialon crystal grains 2 having high ion bonding property are optimized, so that the resulting sialon sintered compact can exhibit still higher hardness.

The predetermined region mentioned above refers to a region with a length of 15 μm to 20 μm and a width of 20 μm to 30 μm in a polished surface of the sialon sintered compact. The proportion of the area of the main phases can be measured by, for example, analyzing images taken through a scanning electron microscope at a magnification of 4000 times to 6000 times with an image analysis software program (A-zo kun, produced by Asahi Kasei Engineering).

Preferably, the rare-earth element is selected from lanthanoide series (La, Ce, Pr, Nd, Pm, Sm, Eu, Gd, Tb, Dy, Ho, Er, Tm, Yb and Lu). It is particularly advantageous that it is at least one of yttrium (Y), erbium (Er), ytterbium (Yb) and lutetium (Lu). If the main phase contains yttrium (Y), YAG ($3Y_2O_3 \cdot 5Al_2O_3$) tends to separate out at the grain boundary phases. Once YAG ($3Y_2O_3 \cdot 5Al_2O_3$) separates out, the hardness is not easily reduced even if the sintered compact is exposed to high temperature environment. If the main phase contains erbium (Er), ytterbium (Yb) or lutetium (Lu), which are elements having smaller ion radii in the group 3 of the periodic table, the bonding strengths of these element with the elements Si, O and N forming the $\alpha$-sialon and $\beta$-sialon increase, and accordingly phonon transmission and thermal conductivity can be increased. Since the bonding strengths of Si, O and N with erbium (Er), ytterbium (Yb) and lutetium (Lu) are high, the lattice vibration by thermal energy is small and cubical expansion resulting from temperature changes is small. Hence, the thermal expansion coefficient can be reduced to increase thermal shock resistance.

Also, the sialon sintered compact of the present embodiment preferably contains at least one of titanium nitride, titanium carbide, titanium carbonitride, and silicon carbide. Sialon sintered compact containing at least one of titanium nitride, titanium carbide, titanium carbonitride, and silicon carbide can exhibit a still higher hardness.

Titanium nitride, titanium carbide, titanium carbonitride, and silicon carbide are expressed by the compositional formulas $TiN$, $Ti_2N$, $TiC$, $TiC_xN_{1-x}$ (amount x of substituent in the solid solution may satisfy $0.01 \leq x \leq 0.08$), and $SiC$, respectively. If any of these compounds are present in the sialon sintered compact, the compound preferably dots the sintered compact in the form of grains of 0.5 $\mu$m to 50 $\mu$m, desirably 2 $\mu$m to 20 $\mu$m. The grains of these compounds, which have higher hardness than $\beta$-sialon, increase the hardness of the sintered compact. Among these compounds, TiN has the effect of increasing the degree of sintering of sialon sintered compact and is therefore suitable.

From the viewpoint of increasing the hardness, it is preferable that the grains of titanium nitride, titanium carbide, titanium carbonitride and silicon carbide account in total for 1.0% to 35%, preferably 10% to 30%, of the area of the above-mentioned predetermined region. For hardness, the area of the grains should be measured at the surface. The state of the grains at the surface is however considered to be the same as the state of the grains in the above-mentioned predetermined region for the convenience of using SEM or the like.

The sialon sintered compact of the present embodiment is superior in hardness, and specifically has a Vickers hardness (Hv) of 16.0 GPa or more. The sialon sintered compact having such a high hardness is unlikely to be scratched or flawed at the surface thereof. Even if the sialon sintered compact comes in contact with hard matter such as glass or metal dust, the surface thereof is not easily scratched. The Vickers hardness (Hv) of the surface can be measured in accordance with JIS R 1610-2003 and is preferably 17.6 GPa or more.

The wear-resistant component according to an embodiment of the present invention, which is made of the sialon sintered compact of the present embodiment having a high hardness, is unlikely to be scratched even if it is subjected to sliding contact, and can therefore be used for a long time with reliability. When the wear-resistant component is a fishing line guide ring, the surface of the guide ring may be covered with a transparent wear-resistant film, such as an amorphous hard carbon film, to enhance the wear resistance further.

If the sialon sintered compact is to be worn, in general, the sintered compact is preferably lighter. The sialon sintered compact of the present embodiment preferably has an apparent density of 3.4 g/cm$^3$ or less (but is not 0 g/cm$^3$). The apparent density can be measured in accordance with JIS R 1634-1998. It is also preferable that the content of allergic metals, such as mercury, nickel, tin, zinc and palladium, which can cause dermatitis if in contact with skin for a long time, be low. The content of each of these allergic metals is preferably 0.1% by mass or less relative to 100% by mass of the sialon sintered compact, and the total content of these metals is preferably 0.5% by mass or less. The contents of allergic metals can be measured by ICP (Inductively Coupled Plasma) emission spectrometry.

Exemplary processes for manufacturing the sialon sintered compact of the present embodiment and a wear-resistant component made of the sialon sintered compact will now be described.

First, $\alpha$-sialon powder expressed by a compositional formula $M_x(Si, Al)_{12}(O, N)_{16}$ (amount x of substituent in the solid solution satisfies $0.3 \leq x \leq 2$; M represents a rare-earth element, calcium, magnesium, sodium, or lithium) in which $\beta$ structure is less than 50% is placed in a barrel mill, a tumbling mill, a vibrating mill, a bead mill, an attritor, or the like, and agitated to be pulverized into a slurry. The proportion of the $\beta$ structure in the $\alpha$-sialon powder is preferably 10% or less.

For pulverizing the $\alpha$-sialon powder, balls made of sintered compact of $\alpha$-sialon, $\beta$-sialon, silicon nitride, alumina or the like may be used. Desirably, the balls are made of a material unlikely to be contaminated with impurities, or an $\alpha$-sialon or a $\beta$-sialon sintered compact having the same composition, or a silicon nitride sintered compact.

Preferably, the $\alpha$-sialon powder is pulverized to a $D_{50}$ particle size of 0.7 $\mu$m or less and a $D_{90}$ particle size of 0.8 $\mu$m to 1.2 $\mu$m from the viewpoint of increasing the degree of sintering, wherein the $D_{50}$ is the particle size at a cumulative volume of 50% and the $D^{90}$ is the particle size at a cumulative volume of 90%, relative to the total cumulative volume, 100%, of the particle size distribution curve. The particle size distribution resulting from the pulverization can be controlled by varying, for example, the outer diameter or number of the balls, the viscosity of the slurry, or the pulverization time.

In addition, it is advantageous from the viewpoint of improving formability to add an organic binder such as paraffin wax, polyvinyl alcohol (PVA) or polyethylene glycol (PEG) to the slurry in a proportion of 1% to 10% by mass to 100% by mass of $\alpha$-sialon powder. Furthermore, it is preferable to add a dispersant to improve dispersibility. Preferably, the slurry is subjected to deferrization before adding an organic binder.

For producing a sialon sintered compact in which the $\alpha$-sialon contains 1% by mole to 3% by mole of a rare-earth element or calcium in the solid solution, an $\alpha$-sialon powder can be used which is expressed by the above compositional formula in which the M represents a rare-earth element or calcium and the amount x of substituent satisfies $0.28 \leq x \leq 0.87$.

Also, in order for the sialon sintered compact to contain at least one of titanium nitride, titanium carbide, titanium carbonitride and silicon carbide, a powder of 0.5 to 50 $\mu$m, preferably 2 to 20 $\mu$m, of at least one of TiN, $Ti_2N$, TiC, $TiC_xN_{1-x}$ (amount x of substituent in the solid solution may satisfy $0.01 \leq x \leq 0.08$) and SiC may be added to the $\alpha$-sialon powder. Alternatively, $TiO_2$ powder may be added. This powder will be converted into titanium nitride after sintering described later.

Next, foreign matter is removed from the slurry through a sieve, and the slurry is then spray-dried into granules.

The resulting granules are formed into a compact in a desired die, rubber mold or the like by uniaxial pressing or cold isostatic press (CIP). The pressure for this formation is preferably 50 MPa to 300 MPa. The compact formed is desirably worked into a shape as desired by cutting. If the sialon sintered compact is used as a bearing ball or any other spherical body, the granules are pressed in a predetermined die or mold by uniaxial pressing. The pressed granules are wrapped in a rubber sheet and then pressed into a compact by cold isostatic press (CIP).

The resulting compact was degreased in an atmosphere of nitrogen, vacuum or the like, if necessary. The degreasing temperature, which depends on the organic binder used, is desirably 900°C or less, and particularly desirably in the range of 500°C to 800°C. For degreasing in the air, the temperature is desirably 600°C or less from the viewpoint of preventing oxidation.

Subsequently, the compact is fired in a firing furnace. For this firing, heating from room temperature to a temperature in the range of 300°C to 1000°C is performed in a vacuum atmosphere, and nitrogen gas is introduced to the furnace, and the nitrogen partial pressure is kept at 10 to 2000 kPa. The constituents thus react in a solid phase and turn into liquid phase constituents around 1000°C to 1400°C. For example, the material is heat-treated by being held at a temperature of 1400°C or more and less than 1500°C for 1 to 5 hours.

In the process for manufacturing the sialon sintered compact of the present embodiment, the heat treatment performed by holding the $\alpha$-sialon at a temperature in the range of 1400°C or more and less than 1500°C, in which sialon starts to turn into a $\beta$ structure, for 1 to 5 hours allows a $\beta$-sialon layer to be formed on the surface of the material being sintered. Then, the molar concentration of aluminum in the $\beta$-sialon turned from the $\alpha$-sialon within the material being sintered is increased to a level larger than that in the $\alpha$-sialon by the subsequent firing operation.

In order to produce a sialon sintered compact in which the molar concentration of aluminum in $\beta$-sialon is 1.3 times or more that in $\alpha$-sialon, for example, an $\alpha$-sialon powder expressed by a compositional formula $M_{0.5}(Si_{9.7}, Al_{2.3})(O, N)_{16}$ (M represents a rare-earth element, calcium, magnesium, sodium or lithium) is heat-treated by being held at a temperature of 1400°C or more and less than 1500°C for 1.5 to 5 hours. In order to control the molar concentration of aluminum in the $\beta$-sialon to a level of 1.5 times or more that in the $\alpha$-sialon, heat treatment at a temperature of 1400°C or more and less than 1500°C is performed for 3 to 5 hours.

After the heat treatment, the temperature is further increased up to a maximum temperature of 1700°C or more and less than 1800°C, and this temperature is held for 3 to 14 hours for firing. The fired material is subjected to cutting to yield the sialon sintered compact of the present embodiment. The sialon sintered compact including a $\beta$-sialon layer on the surface thereof is superior in fracture toughness because it includes needle crystals of $\beta$-sialon on the surface thereof. In addition, since the inside of the sialon sintered compact is hard, the sialon sintered compact is considered superior in bending strength.

In order to produce a sialon sintered compact in which the main phases account for 60% to 90% of the area of a predetermined region of the sintered compact in sectional view, the maximum temperature may be held for 8 to 12 hours.

The compact may be placed together with a powder mainly containing silicon nitride or silicon carbide, or a mixed powder of either silicon nitride or silicon carbide to which carbon powder is appropriately added, and is thus fired in the air in an electric furnace. In this process, the oxygen in the air is consumed by a reaction with the powder placed together with the compact, so that the firing is performed in a substantially nitrogen atmosphere.

If the sialon sintered compact is used as a bearing ball, the resulting sintered compact is finished to, for example, a variation of ball diameter of 0.1 $\mu$m, a deviation from spherical form of 0.1 $\mu$m and an arithmetic average surface roughness (Ra) of 0.003 $\mu$m by barrel finishing, ball finishing or the like. A bearing ball is thus produced which is an implementation of the wear-resistant component of an embodiment of the present invention. The variation of ball diameter, the deviation from spherical form and the arithmetic average surface roughness (Ra) are measured in accordance with JIS B 1501-2009.

If the sialon sintered compact is used as a fishing line guide ring, the granules are pressed in a predetermined die at a pressure in the range of 50 MPa to 200 MPa by uniaxial pressing, and, if necessary, degreased in the same manner as described above. Firing is also performed in the same manner as described above, and the surface of the resulting sintered compact, required to be decorative (hereinafter referred to as decorative surface) is subjected to barrel finishing. Thus a fishing line guide ring is produced which is an implementation of the wear-resistant component of an embodiment of the present invention.

Pores in the decorative surface is desirably controlled to a maximum diameter of 30 $\mu$m or less. By controlling the maximum pore size in this range, adhesion of foreign matter or contaminant in the pores can be reduced to prevent the degradation of wear resistance. In order to control the maximum pore size in the decorative surface of the fishing line guide ring to 30 $\mu$m or less, the forming is simply performed at a pressure in the range of 150 MPa to 200 MPa.

For a wear-resistant component having a complicated shape, a block or a shape close to the shape of the final product, formed by dry pressing, cold isostatic press forming, extrusion molding, injection molding or the like may be sintered and then cut into the shape of the product, followed by lapping and barrel finishing in that order. Alternatively, a shape of the product formed by injection molding may be sintered, followed by lapping and barrel finishing in that order.

It is preferable that the decorative surface be worked to an arithmetic average height (Ra) of 0.03 $\mu$m or less. In order to work the decorative surface to an arithmetic average height (Ra) of 0.03 $\mu$m or less, barrel finishing is simply applied. The barrel finishing can be performed in a wet process for 24 hours or more, using a rotational barrel finishing machine into which a green carborundum (GC) is placed as a medium.

The arithmetic average height (Ra) of the decorative surface can be measured in accordance with JIS B 0601-2001. In the case of measurement using a stylus type surface roughness tester at a measuring length of 5 mm and a cut-off length of 0.8 mm, for example, the stylus having a tip of 2 $\mu$m in radius is touched to the decorative surface of the wear-resistant component, and the scanning speed of the stylus is set at 0.5 mm/s. Thus measured 5 points are averaged to yield an arithmetic average height (Ra).

Examples of the present invention will now be described in detail. However, the invention is not limited to the Examples.

EXAMPLE 1

$\alpha$-Sialon powders composed of 100% $\alpha$-structure, having the compositions shown in Tables 1 and 2 were each wet-mixed and pulverized, and deferrized in a vibrating mill, thus preparing slurries. To each slurry, 6% by mass of an organic binder of polyvinyl alcohol (PVA) was added relative to 100% by mass of the $\alpha$-sialon powder.

Then, foreign matter was removed from the slurry through a sieve of 200 in mesh number in accordance with ASTM E 11-61, and the slurry was then spray-dried into granules.

The granules were pressed in a predetermined die at a forming pressure of 50 MPa by uniaxial pressing, followed by cold isostatic press (CIP) at a forming pressure of 300 MPa.

The resulting compact was fired in a firing furnace. For this firing, heating from room temperature to 800°C was performed in a vacuum atmosphere. Then, nitrogen gas was introduced to the furnace, and heating was continued with the nitrogen partial pressure kept at 1000 kPa. The sample was thus heat-treated at the temperature for the period of time shown in Table 1 or 2. Then, heating was further continued to increase the temperature to 1750°C for firing, and the sample was held at this firing temperature for 10 hours. Thus Sample Nos. 1 to 44 were prepared.

The phases of each sample was identified by X-ray diffraction, and the compositions of the $\alpha$-sialon and $\beta$-sialon in each phase were determined by the Rietveld method. Also, the molar concentrations M$\alpha$ and M$\beta$ of aluminum in the $\alpha$-sialon and $\beta$-sialon were calculated using the determined compositions.

The Vickers hardness of each sample was also measured with a test force of 9.8 N and a holding time of 15 s in accordance with JIS R 1610-2003.

Tables 1 and 2 show the compositions of $\alpha$-sialon and $\beta$-sialon, the molar concentrations M$\alpha$ and M$\beta$ of aluminum in the $\alpha$-sialon and the $\beta$-sialon, the ratio M of the molar concentration M$\beta$ of aluminum in the $\beta$-sialon to the molar concentration M$\alpha$ of aluminum in the $\alpha$-sialon and the Vickers hardness, for each sample.

[Table 1]

Table 1 a

| Sample No. | $\alpha$-Sialon powder | Heat treatment | |
|---|---|---|---|
| | | Temperature | Holding time |
| | | (°C) | (Hours) |
| 1 | $Y_{0.5}Si_{10.9}Al_{1.1}O_{0.9}N_{15.1}$ | 1350 | 3.0 |

(continued)

| Sample No. | α-Sialon powder | Heat treatment | |
|---|---|---|---|
| | | Temperature | Holding time |
| | | (°C) | (Hours) |
| 2 | $Y_{0.5}Si_{9.1}Al_{2.9}O_{0.9}N_{15.1}$ | 1490 | 5.0 |
| 3 | $Y_{0.5}Si_{10.9}Al_{1.1}O_{0.9}N_{15.1}$ | 1490 | 1.2 |
| 4 | $Y_{0.5}Si_{10.55}Al_{1.45}O_{0.9}N_{15.1}$ | 1490 | 3.0 |
| 5 | $Y_{0.5}Si_{9.7}Al_{2.3}O_{0.9}N_{15.1}$ | 1470 | 1.5 |
| 6 | $Y_{0.5}Si_{9.7}Al_{2.3}O_{0.9}N_{15.1}$ | 1490 | 2.0 |
| 7 | $Y_{0.5}Si_{9.7}Al_{2.3}O_{0.9}N_{15.1}$ | 1490 | 3.0 |
| 8 | $Y_{0.5}Si_{9.7}Al_{2.3}O_{0.9}N_{15.1}$ | 1490 | 4.0 |
| 9 | $Y_{0.5}Si_{9.7}Al_{2.3}O_{0.9}N_{15.1}$ | 1490 | 5.0 |
| 10 | $Y_{0.5}Si_{9.35}Al_{2.65}O_{0.9}N_{15.1}$ | 1490 | 1.2 |
| 11 | $Y_{0.5}Si_{9.2}Al_{2.8}O_{0.9}N_{15.1}$ | 1490 | 1.0 |
| 12 | $Y_{0.5}Si_{10.9}Al_{1.1}O_{0.9}N_{15.1}$ | 1350 | 3.0 |
| 13 | $Yb_{0.5}Si_{9.1}Al_{2.9}O_{0.9}N_{15.1}$ | 1490 | 5.0 |
| 14 | $Yb_{0.5}Si_{10.9}Al_{1.1}O_{0.9}N_{15.1}$ | 1490 | 1.2 |
| 15 | $Yb_{0.5}Si_{10.55}Al_{1.45}O_{0.9}N_{15.1}$ | 1490 | 3.0 |
| 16 | $Yb_{0.5}Si_{9.7}Al_{2.3}O_{0.9}N_{15.1}$ | 1470 | 1.5 |
| 17 | $Yb_{0.5}Si_{9.7}Al_{2.3}O_{0.9}N_{15.1}$ | 1490 | 2.0 |
| 18 | $Yb_{0.5}Si_{9.7}Al_{2.3}O_{0.9}N_{15.1}$ | 1490 | 3.0 |
| 19 | $Yb_{0.5}Si_{9.7}Al_{2.3}O_{0.9}N_{15.1}$ | 1490 | 4.0 |
| 20 | $Yb_{0.5}Si_{9.7}Al_{2.3}O_{0.9}N_{15.1}$ | 1490 | 5.0 |
| 21 | $Yb_{0.5}Si_{9.35}Al_{2.65}O_{0.9}N_{15.1}$ | 1490 | 1.2 |
| 22 | $Yb_{0.5}Si_{9.2}Al_{2.8}O_{0.9}N_{15.1}$ | 1490 | 1.0 |

Table 1b

| Sample No. | Sintered compact | |
|---|---|---|
| | α-Sialon | β-Sialon |
| 1 | $Y_{0.5}Si_{10.9}Al_{1.1}O_{0.9}N1_{5.1}$ | $Si_{5.6}Al_{0.4}O_{0.4}N_{7.6}$ |
| 2 | $Y_{0.5}Si_{10.55}Al_{1.45}O_{0.9}N_{15.1}$ | $Si_{2.5}Al_{3.5}O_{1.5}N_{6.5}$ |
| 3 | $Y_{0.5}Si_{10.9}Al_{1.1}O_{0.9}N_{15.1}$ | $Si_{5.4}Al_{0.6}O_{1.5}N_{6.5}$ |
| 4 | $Y_{0.5}Si_{10.55}Al_{1.45}O_{0.9}N_{15.1}$ | $Si_{4.5}Al_{1.5}O_{1.5}N_{6.5}$ |
| 5 | $Y_{0.5}Si_{9.7}Al_{2.3}O_{0.9}N_{15.1}$ | $Si_{4.3}Al_{1.7}O_{1.7}N_{6.3}$ |
| 6 | $Y_{0.5}Si_{9.7}Al_{2.3}O_{0.9}N_{15.1}$ | $Si_{4.5}Al_{1.5}O_{1.5}N_{6.5}$ |
| 7 | $Y_{0.5}Si_{9.7}Al_{2.3}O_{0.9}N_{15.1}$ | $Si_{4.3}Al_{1.7}O_{1.7}N_{6.3}$ |
| 8 | $Y_{0.5}Si_{9.7}Al_{2.3}O_{0.9}N_{15.1}$ | $Si_4Al_2O_2N_6$ |
| 9 | $Y_{0.5}Si_{9.7}Al_{2.3}O_{0.9}N_{15.1}$ | $Si_{3.8}Al_{2.2}O_{2.2}N_{5.8}$ |
| 10 | $Y_{0.5}Si_{9.35}Al_{2.65}O_{0.9}N_{15.1}$ | $Si_{4.5}Al_{1.5}O_{1.5}N_{6.5}$ |

(continued)

| Sample No. | Sintered compact | |
| --- | --- | --- |
| | $\alpha$-Sialon | $\beta$-Sialon |
| 11 | $Y_{0.5}Si_{9.2}Al_{2.8}O_{0.9}N_{15.1}$ | $Si_{4.5}Al_{1.5}O_{1.5}N_{6.5}$ |
| 12 | $Yb_{0.5}Si_{10.9}Al_{1.1}O_{0.9}N_{15.1}$ | $Si_{5.6}Al_{0.4}O_{0.4}N_{7.6}$ |
| 13 | $Yb_{0.5}Si_{10.55}Al_{1.45}O_{0.9}N_{15.1}$ | $Si_{2.5}Al_{3.5}O_{1.5}N_{6.5}$ |
| 14 | $Yb_{0.5}Si_{10.9}Al_{1.1}O_{0.9}N_{15.1}$ | $Si_{5.4}Al_{0.6}O_{1.5}N_{6.5}$ |
| 15 | $Yb_{0.5}Si_{10.55}Al_{1.45}O_{0.9}N_{15.1}$ | $Si_{4.5}Al_{1.5}O_{1.5}N_{6.5}$ |
| 16 | $Yb_{0.5}Si_{9.7}Al_{2.3}O_{0.9}N_{15.1}$ | $Si_{4.3}Al_{1.7}O_{1.7}N_{6.3}$ |
| 17 | $Yb_{0.5}Si_{9.7}Al_{2.3}O_{0.9}N_{15.1}$ | $Si_{4.5}Al_{1.5}O_{1.5}N_{6.5}$ |
| 18 | $Yb_{0.5}Si_{9.7}Al_{2.3}O_{0.9}N_{15.1}$ | $Si_{4.3}Al_{1.7}O_{1.7}N_{6.3}$ |
| 19 | $Yb_{0.5}Si_{9.7}Al_{2.3}O_{0.9}N_{15.1}$ | $Si_4Al_2O_2N_6$ |
| 20 | $Yb_{0.5}Si_{9.7}Al_{2.3}O_{0.9}N_{15.1}$ | $Si_{3.8}Al_{2.2}O_{2.2}N_{5.8}$ |
| 21 | $Yb_{0.5}Si_{9.35}Al_{2.65}O_{0.9}N_{15.1}$ | $Si_{4.5}Al_{1.5}O_{1.5}N_{6.5}$ |
| 22 | $Yb_{0.5}Si_{9.2}Al_{2.8}O_{0.9}N_{15.1}$ | $Si_{4.5}Al_{1.5}O_{1.5}N_{6.5}$ |

Table 1c

| Sample No. | Sintered compact | | | | |
| --- | --- | --- | --- | --- | --- |
| | Aluminum molar concentration | | M | Rare-earth element or calcium in $\alpha$-sialon | Vickers hardness Hv |
| | $\alpha$-Sialon | $\beta$-Sialon | | | |
| | $M_\alpha$ (mol%) | $M_\beta$ (mol%) | $M_\beta/M_\alpha$ ratio | (mol%) | (GPa) |
| 1 | 3.9 | 2.9 | 0.74 | 1.8 | 14.0 |
| 2 | 5.0 | 25.0 | 5.00 | 1.8 | 19.7 |
| 3 | 3.9 | 4.3 | 1.10 | 1.8 | 16.9 |
| 4 | 5.0 | 11.0 | 2.20 | 1.8 | 18.5 |
| 5 | 9.0 | 12.0 | 1.33 | 1.8 | 17.5 |
| 6 | 8.0 | 11.0 | 1.38 | 1.8 | 17.8 |
| 7 | 8.0 | 12.0 | 1.50 | 1.8 | 18.5 |
| 8 | 8.0 | 14.0 | 1.75 | 1.8 | 18.8 |
| 9 | 8.0 | 16.0 | 2.00 | 1.8 | 19.0 |
| 10 | 10.0 | 11.0 | 1.10 | 1.8 | 17.2 |
| 11 | 10.6 | 11.0 | 1.04 | 1.8 | 16.7 |
| 12 | 3.9 | 2.9 | 0.74 | 1.8 | 14.2 |
| 13 | 5.0 | 25.0 | 5.00 | 1.8 | 19.7 |
| 14 | 3.9 | 4.3 | 1.10 | 1.8 | 16.9 |
| 15 | 5.0 | 11.0 | 2.20 | 1.8 | 18.7 |
| 16 | 9.0 | 12.0 | 1.33 | 1.8 | 17.6 |
| 17 | 8.0 | 11.0 | 1.38 | 1.8 | 17.8 |
| 18 | 8.0 | 12.0 | 1.50 | 1.8 | 18.7 |

(continued)

| Sample No. | Sintered compact | | | | |
|---|---|---|---|---|---|
| | Aluminum molar concentration | | M | Rare-earth element or calcium in α-sialon | Vickers hardness Hv |
| | α-Sialon | β-Sialon | | | |
| | $M_\alpha$ (mol%) | $M_\beta$ (mol%) | $M_\beta/M_\alpha$ ratio | (mol%) | (GPa) |
| 19 | 8.0 | 14.0 | 1.75 | 1.8 | 19.0 |
| 20 | 8.0 | 16.0 | 2.00 | 1.8 | 19.2 |
| 21 | 10.0 | 11.0 | 1.10 | 1.8 | 17.1 |
| 22 | 10.6 | 11.0 | 1.04 | 1.8 | 16.4 |

[Table 2]

Table 2a

| Sample No. | α-Sialon powder | Heat treatment | |
|---|---|---|---|
| | | Temperature | Holding time |
| | | (°C) | (Hours) |
| 23 | $Er_{0.5}Si_{10.9}Al_{1.1}O_{0.9}N_{15.1}$ | 1350 | 3.0 |
| 24 | $Er_{0.5}Si_{9.1}Al_{2.9}O_{0.9}N_{15.1}$ | 1490 | 5.0 |
| 25 | $Er_{0.5}Si_{10.9}Al_{1.1}O_{0.9}Ni_{15.1}$ | 1490 | 1.2 |
| 26 | $Er_{0.5}Si_{10.55}Al_{1.45}O_{0.9}N_{15.1}$ | 1490 | 3.0 |
| 27 | $Er_{0.5}Si_{9.7}Al_{2.3}O_{0.9}N_{15.1}$ | 1470 | 1.5 |
| 28 | $Er_{0.5}Si_{9.7}Al_{2.3}O_{0.9}N_{15.1}$ | 1490 | 2.0 |
| 29 | $Er_{0.5}Si_{9.7}Al_{2.3}O_{0.9}N_{15.1}$ | 1490 | 3.0 |
| 30 | $Er_{0.5}Si_{9.7}Al_{2.3}O_{0.9}N_{15.1}$ | 1490 | 4.0 |
| 31 | $Er_{0.5}Si_{9.7}Al_{2.3}O_{0.9}N_{15.1}$ | 1490 | 5.0 |
| 32 | $Er_{0.5}Si_{9.35}Al_{2.65}O_{0.9}N_{15.1}$ | 1490 | 1.2 |
| 33 | $Er_{0.5}Si_{9.2}Al_{2.8}O_{0.9}N_{15.1}$ | 1490 | 1.0 |
| 34 | $Ca_{0.5}Si_{10.9}Al_{1.1}O_{0.9}N_{15.1}$ | 1350 | 3.0 |
| 35 | $Ca_{0.5}Si_{9.1}Al_{2.9}O_{0.9}N_{15.1}$ | 1490 | 5.0 |
| 36 | $Ca_{0.5}Si_{10.9}Al_{1.1}O_{0.9}N_{15.1}$ | 1490 | 1.2 |
| 37 | $Ca_{0.5}Si_{10.55}Al_{1.45}O_{0.9}N_{15.1}$ | 1490 | 3.0 |
| 38 | $Ca_{0.5}Si_{9.7}Al_{2.3}O_{0.9}N_{15.1}$ | 1470 | 1.5 |
| 39 | $Ca_{0.5}Si_{9.7}Al_{2.3}O_{0.9}N_{15.1}$ | 1490 | 2.0 |
| 40 | $Ca_{0.5}Si_{9.7}Al_{2.3}O_{0.9}N_{15.1}$ | 1490 | 3.0 |
| 41 | $Ca_{0.5}Si_{9.7}Al_{2.3}O_{0.9}N_{15.1}$ | 1490 | 4.0 |
| 42 | $Ca_{0.5}Si_{9.7}Al_{2.3}O_{0.9}N_{15.1}$ | 1490 | 5.0 |
| 43 | $Ca_{0.5}Si_{9.35}Al_{2.65}O_{0.9}N_{15.1}$ | 1490 | 1.2 |
| 44 | $Ca_{0.5}Si_{9.2}Al_{2.8}O_{0.9}N_{15.1}$ | 1490 | 1.0 |

Table 2b

| Sample No. | Sintered compact | |
|---|---|---|
| | α-Sialon | β-Sialon |
| 23 | $Er_{0.5}Si_{10.9}Al_{1.1}O_{0.9}N_{15.1}$ | $Si_{5.6}Al_{0.4}O_{0.4}N_{7.6}$ |
| 24 | $Er_{0.5}Si_{10.55}Al_{1.45}O_{0.9}N_{15.1}$ | $Si_{2.5}Al_{3.5}O_{1.5}N_{6.5}$ |
| 25 | $Er_{0.5}Si_{10.9}Al_{1.1}O_{0.9}N_{15.1}$ | $Si_{5.4}Al_{0.6}O_{1.5}N_{6.5}$ |
| 26 | $Er_{0.5}Si_{10.55}Al_{1.45}O_{0.9}N_{15.1}$ | $Si_{4.5}Al_{1.5}O_{1.5}N_{6.5}$ |
| 27 | $Er_{0.5}Si_{9.7}Al_{2.3}O_{0.9}N_{15.1}$ | $Si_{4.3}Al_{1.7}O_{1.7}N_{6.3}$ |
| 28 | $Er_{0.5}Si_{9.7}Al_{2.3}O_{0.9}N_{15.1}$ | $Si_{4.5}Al_{1.5}O_{1.5}N_{6.5}$ |
| 29 | $Er_{0.5}Si_{9.7}Al_{2.3}O_{0.9}N_{15.1}$ | $Si_{4.3}Al_{1.7}O_{1.7}N_{6.3}$ |
| 30 | $Er_{0.5}Si_{9.7}Al_{2.3}O_{0.9}N_{15.1}$ | $Si_4Al_2O_2N_6$ |
| 31 | $Er_{0.5}Si_{9.7}Al_{2.3}O_{0.9}N_{15.1}$ | $Si_{3.8}Al_{2.2}O_{2.2}N_{5.8}$ |
| 32 | $Er_{0.5}Si_{9.35}Al_{2.65}O_{0.9}N_{15.1}$ | $Si_{4.5}Al_{1.5}O_{1.5}N_{6.5}$ |
| 33 | $Er_{0.5}Si_{9.2}Al_{2.8}O_{0.9}N_{15.1}$ | $Si_{4.5}Al_{1.5}O_{1.5}N_{6.5}$ |
| 34 | $Ca_{0.5}Si_{10.9}Al_{1.1}O_{0.9}N_{15.1}$ | $Si_{5.6}Al_{0.4}O_{0.4}N_{7.6}$ |
| 35 | $Ca_{0.5}Si_{10.55}Al_{1.45}O_{0.9}N_{15.1}$ | $Si_{2.5}Al_{3.5}O_{1.5}N_{6.5}$ |
| 36 | $Ca_{0.5}Si_{10.9}Al_{1.1}O_{0.9}N_{15.1}$ | $Si_{5.4}Al_{0.6}O_{1.5}N_{6.5}$ |
| 37 | $Ca_{0.5}Si_{10.55}Al_{1.45}O_{0.9}N_{15.1}$ | $Si_{4.5}Al_{1.5}O_{1.5}N_{6.5}$ |
| 38 | $Ca_{0.5}Si_{9.7}Al_{2.3}O_{0.9}N_{15.1}$ | $Si_{4.3}Al_{1.7}O_{1.7}N_{6.3}$ |
| 39 | $Ca_{0.5}Si_{9.7}Al_{2.3}O_{0.9}N_{15.1}$ | $Si_{4.5}Al_{1.5}O_{1.5}N_{6.5}$ |
| 40 | $Ca_{0.5}Si_{9.7}Al_{2.3}O_{0.9}N_{15.1}$ | $Si_{4.3}Al_{1.7}O_{1.7}N_{6.3}$ |
| 41 | $Ca_{0.5}Si_{9.7}Al_{2.3}O_{0.9}N_{15.1}$ | $Si_4Al_2O_2N_6$ |
| 42 | $Ca_{0.5}Si_{9.7}Al_{2.3}O_{0.9}N_{15.1}$ | $Si_{3.8}Al_{2.2}O_{2.2}N_{5.8}$ |
| 43 | $Ca_{0.5}Si_{9.35}Al_{2.65}O_{0.9}N_{15.1}$ | $Si_{4.5}Al_{1.5}O_{1.5}N_{6.5}$ |
| 44 | $Ca_{0.5}Si_{9.2}Al_{2.8}O_{0.9}N_{15.1}$ | $Si_{4.5}Al_{1.5}O_{1.5}N_{6.5}$ |

Table 2c

| Sample No. | Sintered compact | | | | |
|---|---|---|---|---|---|
| | Aluminum molar concentration | | M | Rare-earth element or calcium in α-sialon | Vickers hardness Hv |
| | α-Sialon | β-Sialon | | | |
| | $M_\alpha$ (mol%) | $M_\beta$ (mol%) | $M_\beta/M_\alpha$ ratio | (mol%) | (GPa) |
| 23 | 3.9 | 2.9 | 0.74 | 1.8 | 14.1 |
| 24 | 5.0 | 25.0 | 5.00 | 1.8 | 19.7 |
| 25 | 3.9 | 4.3 | 1.10 | 1.8 | 16.6 |
| 26 | 5.0 | 11.0 | 2.20 | 1.8 | 18.4 |
| 27 | 9.0 | 12.0 | 1.33 | 1.8 | 17.5 |
| 28 | 8.0 | 11.0 | 1.38 | 1.8 | 17.8 |
| 29 | 8.0 | 12.0 | 1.50 | 1.8 | 18.6 |
| 30 | 8.0 | 14.0 | 1.75 | 1.8 | 18.9 |
| 31 | 8.0 | 16.0 | 2.00 | 1.8 | 19.1 |

(continued)

| Sample No. | Sintered compact | | | | |
|---|---|---|---|---|---|
| | Aluminum molar concentration | | M | Rare-earth element or calcium in α-sialon | Vickers hardness Hv |
| | α-Sialon | β-Sialon | | | |
| | $M_\alpha$ (mol%) | $M_\beta$ (mol%) | $M_\beta/M_\alpha$ ratio | (mol%) | (GPa) |
| 32 | 10.0 | 11.0 | 1.10 | 1.8 | 17.1 |
| 33 | 10.6 | 11.0 | 1.04 | 1.8 | 16.4 |
| 34 | 3.9 | 2.9 | 0.74 | 1.8 | 13.9 |
| 35 | 5.0 | 25.0 | 5.00 | 1.8 | 19.7 |
| 36 | 3.9 | 4.3 | 1.10 | 1.8 | 16.9 |
| 37 | 5.0 | 11.0 | 2.20 | 1.8 | 18.6 |
| 38 | 9.0 | 12.0 | 1.33 | 1.8 | 17.5 |
| 39 | 8.0 | 11.0 | 1.38 | 1.8 | 17.6 |
| 40 | 8.0 | 12.0 | 1.50 | 1.8 | 18.5 |
| 41 | 8.0 | 14.0 | 1.75 | 1.8 | 18.7 |
| 42 | 8.0 | 16.0 | 2.00 | 1.8 | 18.9 |
| 43 | 10.0 | 11.0 | 1.10 | 1.8 | 17.0 |
| 44 | 10.6 | 11.0 | 1.04 | 1.8 | 16.5 |

As shown in Tables 1 and 2, Sample Nos. 2 to 11, 13 to 22, 24 to 33, and 35 to 44, each in which the molar concentration of aluminum in the β-sialon was higher than that in the α-sialon, exhibited high Vickers hardnesses Hv of 16.4 GPa or more.

Sample Nos. 2, 4 to 9, 13, 15 to 20, 24, 26 to 31, 35, and 37 to 42, each in which the molar concentration $M_\beta$ of aluminum in the β-sialon was 1.3 times or more that in the α-sialon, exhibited high Vickers hardnesses Hv of 17.5 GPa or more.

Also, Sample Nos. 2, 4, 7 to 9, 13, 15, 18 to 20, 24, 26, 29 to 31, 35, 37, and 40 to 42, each in which the molar concentration $M_\beta$ of aluminum in the β-sialon was 1.5 times or more that in the α-sialon, exhibited still higher Vickers hardnesses Hv of 18.4 GPa or more. This suggests that when the molar concentration $M_\beta$ is 1.5 times or more the molar concentration $M_\alpha$, the hardness tends to increase.

Furthermore, Sample Nos. 2, 4 to 10, 13, 15 to 21, 24, 26 to 32, 35, and 37 to 43, each in which the molar concentration $M_\alpha$ of aluminum in the α-sialon was in the range of 5% by mole to 10% by mole, exhibited Vickers hardnesses Hv of 17.0 GPa or more. This suggests that when the molar concentration $M_\alpha$ is in the range of 5% by mole to 10% by mole, the hardness tends to increase.

In addition, Sample Nos. 2, 4, 7 to 9, 13, 15, 18 to 20, 24, 26, 29 to 31, 35, 37, and 40 to 42, each in which the molar concentration $M_\beta$ of aluminum in the β-sialon was 1.5 times or more that in the α-sialon and the molar concentration $M_\alpha$ of aluminum in the α-sialon was in the range of 5% by mole to 10% by mole, exhibited still higher Vickers hardnesses Hv of 18.4 GPa or more. It was thus found that the hardness tends to increase particularly.

EXAMPLE 2

α-Sialon powders composed of 100% α-structure, having the compositions shown in Table 3 were each wet-mixed and pulverized, and deferrized in a vibrating mill, thus preparing slurries.

Slurries were subjected to the same process as in Example 1 until each compact was placed in a firing furnace and the temperature was increased with the nitrogen partial pressure kept at 1000 kPa by introducing nitrogen gas into the furnace. The sample was thus heat-treated at a temperature of 1490°C for 4 hours. Then, heating was further continued to increase the temperature to 1750°C for firing, and the sample was held at this firing temperature for 10 hours.

The compositions of α-sialon and β-sialon of each phase, the molar concentrations $M_\alpha$ and $M_\beta$ of aluminum in the α-sialon and the β-sialon, the ratio M of the molar concentration $M_\beta$ of aluminum in the β-sialon to the molar concentration $M_\alpha$ of aluminum in the α-sialon and the Vickers hardness were measured for each sample in the same manner as in Example 1. It was checked through a transmission electron microscope (TEM) whether or not a rare-earth element or calcium was dissolved in the α-sialon. The molar concentration of the rare-earth element or calcium in the solid solution was calculated using the compositional formula of the α-sialon. The results are shown in Table 3.
[Table 3]

Table 3a

| Sample No. | α-Sialon powder | Heat treatment | |
|---|---|---|---|
| | | Temperature | Holding time |
| | | (°C) | (Hours) |
| 45 | $Y_{0.23}Si_{10.55}Al_{1.45}O_{0.9}N_{15.1}$ | 1490 | 4 |
| 46 | $Y_{0.28}Si_{10.55}Al_{1.45}O_{0.9}N_{15.1}$ | 1490 | 4 |
| 47 | $Y_{0.5}Si_{10.55}Al_{1.45}O_{0.9}N_{15.1}$ | 1490 | 4 |
| 48 | $Y_{0.86}Si_{10.55}Al_{1.45}O_{0.9}N_{15.1}$ | 1490 | 4 |
| 49 | $Y_{0.93}Si_{10.55}Al_{1.45}O_{0.9}N_{15.1}$ | 1490 | 4 |
| 50 | $Yb_{0.23}Si_{10.55}Al_{1.45}O_{0.9}N_{15.1}$ | 1490 | 4 |
| 51 | $Yb_{0.28}Si_{10.55}Al_{1.45}O_{0.9}N_{15.1}$ | 1490 | 4 |
| 52 | $Yb_{0.5}Si_{10.55}Al_{1.45}O_{0.9}N_{15.1}$ | 1490 | 4 |
| 53 | $Yb_{0.86}Si_{10.55}Al_{1.45}O_{0.9}N_{15.1}$ | 1490 | 4 |
| 54 | $Yb_{0.93}Si_{10.55}Al_{1.45}O_{0.9}N_{15.1}$ | 1490 | 4 |
| 55 | $Er_{0.23}Si_{10.55}Al_{1.45}O_{0.9}N_{15.1}$ | 1490 | 4 |
| 56 | $Er_{0.28}Si_{10.55}Al_{1.45}O_{0.9}N_{15.1}$ | 1490 | 4 |
| 57 | $Er_{0.5}Si_{10.55}Al_{1.45}O_{0.9}N_{15.1}$ | 1490 | 4 |
| 58 | $Er_{0.86}Si_{10.55}Al_{1.45}O_{0.9}N_{15.1}$ | 1490 | 4 |
| 59 | $Er_{0.93}Si_{10.55}Al_{1.45}O_{0.9}N_{15.1}$ | 1490 | 4 |
| 60 | $Ca_{0.23}Si_{10.55}Al_{1.45}O_{0.9}N_{15.1}$ | 1490 | 4 |
| 61 | $Ca_{0.28}Si_{10.55}Al_{1.45}O_{0.9}N_{15.1}$ | 1490 | 4 |
| 62 | $Ca_{0.5}Si_{10.55}Al_{1.45}O_{0.9}N_{15.1}$ | 1490 | 4 |
| 63 | $Ca_{0.86}Si_{10.55}Al_{1.45}O_{0.9}N_{15.1}$ | 1490 | 4 |
| 64 | $Ca_{0.93}Si_{10.55}Al_{1.45}O_{0.9}N_{15.1}$ | 1490 | 4 |

Table 3b

| Sample No. | Sintered compact | |
|---|---|---|
| | α-Sialon | β-Sialon |
| 45 | $Y_{0.23}Si_{10.55}Al_{1.45}O_{0.9}N_{15.1}$ | $Si_5Al_1O_{1.5}N_{6.5}$ |
| 46 | $Y_{0.28}Si_{10.55}Al_{1.45}O_{0.9}N_{15.1}$ | $Si_5Al_1O_{1.5}N_{6.5}$ |
| 47 | $Y_{0.5}Si_{10.55}Al_{1.45}O_{0.9}N_{15.1}$ | $Si_5Al_1O_{1.5}N_{6.5}$ |
| 48 | $Y_{0.86}Si_{10.55}Al_{1.45}O_{0.9}N_{15.1}$ | $Si_5Al_1O_{1.5}N_{6.5}$ |
| 49 | $Y_{0.9}Si_{10.55}Al_{1.45}O_{0.9}N_{15.1}$ | $Si_{5.35}Al_{0.65}O_{1.5}N_{6.5}$ |
| 50 | $Yb_{0.23}Si_{10.55}Al_{1.45}O_{0.9}N_{15.1}$ | $Si_5Al_1O_{1.5}N_{6.5}$ |
| 51 | $Yb_{0.28}Si_{10.55}Al_{1.45}O_{0.9}N_{15.1}$ | $Si_5Al_1O_{1.5}N_{6.5}$ |
| 52 | $Yb_{0.5}Si_{10.55}Al_{1.45}O_{0.9}N_{15.1}$ | $Si_5Al_1O_{1.5}N_{6.5}$ |

(continued)

| Sample No. | Sintered compact | |
|---|---|---|
| | $\alpha$-Sialon | $\beta$-Sialon |
| 53 | $Yb_{0.86}Si_{10.55}Al_{1.45}O_{0.9}N_{15.1}$ | $Si_5Al_1O_{1.5}N_{6.5}$ |
| 54 | $Yb_{0.93}Si_{10.55}Al_{1.45}O_{0.9}N_{15.1}$ | $Si_{5.35}Al_{0.65}O_{1.5}N_{6.5}$ |
| 55 | $Er_{0.23}Si_{10.55}Al_{1.45}O_{0.9}N_{15.1}$ | $Si_5Al_1O_{1.5}N_{6.5}$ |
| 56 | $Er_{0.28}Si_{10.55}Al_{1.45}O_{0.9}N_{15.1}$ | $Si_5Al_1O_{1.5}N_{6.5}N_{6.5}$ |
| 57 | $Er_{0.5}Si_{10.55}Al_{1.45}O_{0.9}N_{15.1}$ | $Si_5Al_1O_{1.5}N_{6.5}$ |
| 58 | $Er_{0.86}Si_{10.55}Al_{1.45}O_{0.9}N_{15.1}$ | $Si_5Al_1O_{1.5}N_{6.5}$ |
| 59 | $Er_{0.93}Si_{10.55}Al_{1.45}O_{0.9}N_{15.1}$ | $Si_{5.35}Al_{0.65}O_{1.5}N_{6.5}$ |
| 60 | $Ca_{0.23}Si_{10.55}Al_{1.45}O_{0.9}N_{15.1}$ | $Si_5Al_1O_{1.5}N_{6.5}$ |
| 61 | $Ca_{0.28}Si_{10.55}Al_{1.45}O_{0.9}N_{15.1}$ | $Si_5Al_1O_{1.5}N_{6.5}$ |
| 62 | $Ca_{0.5}Si_{10.55}Al_{1.45}O_{0.9}N_{15.1}$ | $Si_5Al_1O_{1.5}N_{6.5}$ |
| 63 | $Ca_{0.86}Si_{10.55}Al_{1.45}O_{0.9}N_{15.1}$ | $Si_5Al_1O_{1.5}N_{6.5}$ |
| 64 | $Ca_{0.93}Si_{10.55}Al_{1.45}O_{0.9}N_{15.1}$ | $Si_{5.35}Al_{0.65}O_{1.5}N_{6.5}$ |

Table 3c

| Sample No. | Sintered compact | | | | |
|---|---|---|---|---|---|
| | Aluminum molar concentration | | M | Rare-earth element or calcium in $\alpha$-sialon | Vickers hardness Hv |
| | $\alpha$-Sialon | $\beta$-Sialon | | | |
| | $M_\alpha$ (mol%) | $M_\beta$ (mol%) | $M_\beta/M_\alpha$ ratio | (mol%) | (GPa) |
| 45 | 5.1 | 7.0 | 1.37 | 0.8 | 17.8 |
| 46 | 5.1 | 7.0 | 1.37 | 1.0 | 18.1 |
| 47 | 5.1 | 7.0 | 1.37 | 1.8 | 18.3 |
| 48 | 5.1 | 7.0 | 1.37 | 3.0 | 18.2 |
| 49 | 3.2 | 4.6 | 1.44 | 3.2 | 16.4 |
| 50 | 5.1 | 7.0 | 1.37 | 0.8 | 17.2 |
| 51 | 5.1 | 7.0 | 1.37 | 1.0 | 18.4 |
| 52 | 5.1 | 7.0 | 1.37 | 1.8 | 18.3 |
| 53 | 5.1 | 7.0 | 1.37 | 3.0 | 18.2 |
| 54 | 3.2 | 4.6 | 1.44 | 3.2 | 16.6 |
| 55 | 5.1 | 7.0 | 1.37 | 0.8 | 17.2 |
| 56 | 5.1 | 7.0 | 1.37 | 1.0 | 18.1 |
| 57 | 5.1 | 7.0 | 1.37 | 1.8 | 18.3 |
| 58 | 5.1 | 7.0 | 1.37 | 3.0 | 18.4 |
| 59 | 3.2 | 4.6 | 1.44 | 3.2 | 16.3 |
| 60 | 5.1 | 7.0 | 1.37 | 0.8 | 17.1 |
| 61 | 5.1 | 7.0 | 1.37 | 1.0 | 18.2 |
| 62 | 5.1 | 7.0 | 1.37 | 1.8 | 18.3 |

(continued)

| Sample No. | Sintered compact | | | | |
|---|---|---|---|---|---|
| | Aluminum molar concentration | | M | Rare-earth element or calcium in $\alpha$-sialon | Vickers hardness Hv |
| | $\alpha$-Sialon | $\beta$-Sialon | | | |
| | $M_\alpha$ (mol%) | $M_\beta$ (mol%) | $M_\beta/M_\alpha$ ratio | (mol%) | (GPa) |
| 63 | 5.1 | 7.0 | 1.37 | 3.0 | 18.1 |
| 64 | 3.2 | 4.6 | 1.44 | 3.2 | 16.3 |

As shown in Table 3, Sample Nos. 46 to 48, 51 to 53, 54 to 58, and 61 to 63, each in which the $\alpha$-sialon contains a rare-earth element or calcium dissolved therein with a molar concentration in the range of 1% by mole to 3% by mole, exhibited Vickers hardnesses Hv of 18.1 GPa or more, higher than Sample Nos. 45, 49, 50, 54, 55, 59, 60, and 64 in which the molar concentration of a rare-earth element or calcium was outside the above range.

EXAMPLE 3

$\alpha$-Sialon powders composed of 100% $\alpha$-structure, having the compositions shown in Table 4 were each wet-mixed and pulverized, and deferrized in a vibrating mill, thus preparing slurries.

Slurries were subjected to the same process as in Example 1 until each compact was placed in a firing furnace and the temperature was increased with the nitrogen partial pressure kept at 1000 kPa by introducing nitrogen gas into the furnace. When the temperature reached 1490°C, each sample was heat-treated for the period of time shown in Table 4, and then heating was further continued to increase the temperature to 1750°C for firing. The sample was held at this firing temperature for 10 hours. The compositions of $\alpha$-sialon and $\beta$-sialon of each phase, the molar concentrations $M\alpha$ and $M\beta$ of aluminum in the $\alpha$-sialon and the $\beta$-sialon, the ratio M of the molar concentration $M\beta$ of aluminum in the $\beta$-sialon to the molar concentration $M\alpha$ of aluminum in the $\alpha$-sialon and the Vickers hardness were measured for each sample in the same manner as in Example 1.

The resulting sintered compact was polished to form a polished surface, and it was confirmed that the $\alpha$-sialon in a region of the polished surface with a length of 17.5 am and a width of 25 $\mu$m formed was the main phase. The area of the main phases was obtained by image analysis of polished sections taken through a scanning electron microscope at a magnification of 5000 times.

[Table 4]

Table 4a

| Sample No. | $\alpha$-Sialon powder | Firing |
|---|---|---|
| | | Holding time |
| | | (Hours) |
| 65 | $Y_{0.23}Si_{10.55}Al_{1.45}O_{0.9}N_{15.1}$ | 6 |
| 66 | $Y_{0.5}Si_{9.7}Al_{1.45}O_{0.9}N_{15.1}$ | 8 |
| 67 | $Y_{0.5}Si_{10.55}Al_{1.45}O_{0.9}N_{15.1}$ | 10 |
| 68 | $Y_{0.86}Si_{10.55}Al_{1.45}O_{0.9}N_{15.1}$ | 12 |
| 69 | $Y_{0.90}Si_{10.55}Al_{1.45}O_{0.9}N_{15.1}$ | 14 |
| 70 | $Yb_{0.23}Si_{10.55}Al_{1.45}O_{0.9}N_{15.1}$ | 6 |
| 71 | $Yb_{0.28}Si_{10.55}Al_{1.45}O_{0.9}N_{15.1}$ | 8 |
| 72 | $Yb_{0.5}Si_{10.55}Al_{1.45}O_{0.9}N_{15.1}$ | 10 |
| 73 | $Yb_{0.86}Si_{10.55}Al_{1.45}O_{0.9}N_{15.1}$ | 12 |
| 74 | $Yb_{0.90}Si_{10.55}Al_{1.45}O_{0.9}N_{15.1}$ | 14 |
| 75 | $Er_{0.23}Si_{10.55}Al_{1.45}O_{0.9}N_{15.1}$ | 6 |
| 76 | $Er_{0.28}Si_{10.55}Al_{1.45}O_{0.9}N_{15.1}$ | 8 |

(continued)

| Sample No. | α-Sialon powder | Firing Holding time (Hours) |
|---|---|---|
| 77 | $Er_{0.5}Si_{10.55}Al_{1.45}O_{0.9}N_{15.1}$ | 10 |
| 78 | $Er_{0.86}Si_{10.55}Al_{1.45}O_{0.9}N_{15.1}$ | 12 |
| 79 | $Er_{0.90}Si_{10.55}Al_{1.45}O_{0.9}N_{15.1}$ | 14 |

Table 4b

| Sample No. | Sintered compact | |
|---|---|---|
| | α-Sialon | β-Sialon |
| 65 | $Y_{0.23}Si_{10.55}Al_{1.45}O_{0.9}N_{15.1}$ | $Si_4Al_2O_2N_6$ |
| 66 | $Y_{0.5}Si_{9.7}Al_{1.45}O_{0.9}N_{15.1}$ | $Si_4Al_2O_2N_6$ |
| 67 | $Y_{0.5}Si_{10.55}Al_{1.45}O_{0.9}N_{15.1}$ | $Si_4Al_2O_2N_6$ |
| 68 | $Y_{0.86}Si_{10.55}Al_{1.45}O_{0.9}N_{15.1}$ | $Si_4Al_2O_2N_6$ |
| 69 | $Y_{0.90}OSi_{10.55}Al_{1.45}O_{0.9}N_{15.1}$ | $Si_4Al_2O_2N_6$ |
| 70 | $Yb_{0.23}Si_{10.55}Al_{1.45}O_{0.9}N_{15.1}$ | $Si_4Al_2O_2N_6$ |
| 71 | $Yb_{0.28}Si_{10.55}Al_{1.45}O_{0.9}N_{15.1}$ | $Si_4Al_2O_2N_6$ |
| 72 | $Yb_{0.5}Si_{0.55}Al_{1.45}O_{0.9}N_{15.1}$ | $Si_4Al_2O_2N_6$ |
| 73 | $Yb_{0.86}Si_{10.55}Al_{1.45}O_{0.9}N_{15.1}$ | $Si_4Al_2O_2N_6$ |
| 74 | $Yb_{0.90}Si_{10.55}Al_{1.45}O_{0.9}N_{15.1}$ | $Si_4Al_2O_2N_6$ |
| 75 | $Er_{0.23}Si_{10.55}Al_{1.45}O_{0.9}N_{15.1}$ | $Si_4Al_2O_2N_6$ |
| 76 | $Er_{0.28}Si_{10.55}Al_{1.45}O_{0.9}N_{15.1}$ | $Si_4Al_2O_2N_6$ |
| 77 | $Er_{0.5}Si_{10.55}Al_{1.45}O_{0.9}N_{15.1}$ | $Si_4Al_2O_2N_6$ |
| 78 | $Er_{0.86}Si_{10.55}Al_{1.45}O_{0.9}N_{15.1}$ | $Si_4Al_2O_2N_6$ |
| 79 | $Er_{0.90}Si_{10.55}Al_{1.45}O_{0.9}N_{15.1}$ | $Si_4Al_2O_2N_6$ |

Table 4c

| Sample No. | Sintered compact | | | | |
|---|---|---|---|---|---|
| | Aluminum molar concentration | | M | | |
| | α-Sialon $M_\alpha$ (mol%) | β-Sialon $M_\beta$ (mol%) | $M_\beta/M_\alpha$ ratio | Percentage (%) of the area (%) of the area of main phases (α-sialon) | Vickers hardness Hv (GPa) |
| 65 | 5.1 | 14 | 2.75 | 92 | 17.8 |
| 66 | 5.1 | 14 | 2.75 | 90 | 18.2 |
| 67 | 5.1 | 14 | 2.75 | 75 | 18.8 |
| 68 | 5.1 | 14 | 2.75 | 60 | 18.4 |
| 69 | 5.1 | 14 | 2.75 | 58 | 17.6 |
| 70 | 5.1 | 14 | 2.75 | 92 | 17.9 |

(continued)

| Sample No. | Sintered compact | | | | |
| --- | --- | --- | --- | --- | --- |
| | Aluminum molar concentration | | M | Percentage (%) of the area (%) of the area of main phases ($\alpha$-sialon) | Vickers hardness Hv (GPa) |
| | $\alpha$-Sialon $M_\alpha$ (mol%) | $\beta$-Sialon $M_\beta$ (mol%) | $M_\beta/M_\alpha$ ratio | | |
| 71 | 5.1 | 14 | 2.75 | 90 | 18.4 |
| 72 | 5.1 | 14 | 2.75 | 72 | 19.0 |
| 73 | 5.1 | 14 | 2.80 | 60 | 18.5 |
| 74 | 5.1 | 14 | 2.75 | 58 | 17.8 |
| 75 | 5.1 | 14 | 2.75 | 92 | 17.9 |
| 76 | 5.1 | 14 | 2.75 | 90 | 18.5 |
| 77 | 5.1 | 14 | 2.75 | 72 | 19.1 |
| 78 | 5.1 | 14 | 2.75 | 60 | 18.6 |
| 79 | 5.1 | 14 | 2.75 | 58 | 17.9 |

As shown in Table 4, Sample Nos. 66 to 68, 71 to 73, and 76 to 78, each in which the main phases accounted for 60% to 90% of the area of the measured section, exhibited Vickers hardnesses Hv of 18.2 GPa or more, thus showing a tendency to increase hardness.

EXAMPLE 4

TiN powder having an average particle size of $3\mu m$, TiCN powder having an average particle size of $8\ \mu m$, TiC powder having an average particle size of $20\ \mu m$, or SiC powder having an average particle size of $2.1\ \mu m$, as shown in Table 6, was added to 25% by volume into $\alpha$-sialon powder composed of 100% $\alpha$-structure, expressed by the compositional formula $Ca_{0.5}(Si_{10.55}, Al_{1.45})(O_{0.9}, N_{15.1})$ of Sample No. 62 in Table 3 used in Example 2. Thus Sample Nos. 80 to 84 were prepared in the same manner as in Example 2. The presence of the grains of these powders in the resulting sintered compacts was confirmed using an X-ray diffraction analyzer (XRD).
Then, the Vickers hardness was measured in the same manner as in Example 2. The results are shown in the Table 5.
[Table 5]

Table 5

| Sample No. | $\alpha$-Sialon powder | Powder added | Vickers hardness Hv (GPa) |
| --- | --- | --- | --- |
| 62 | $Ca_{0.5}Si_{10.55}Al_{1.45}O_{0.9}N_{15.1}$ | None | 18.3 |
| 80 | $Ca_{0.5}Si_{10.55}Al_{1.45}O_{0.9}N_{15.1}$ | TiN | 19.7 |
| 81 | $Ca_{0.5}Si_{10.55}Al_{1.45}O_{0.9}N_{15.1}$ | TiCN | 19.4 |
| 82 | $Ca_{0.5}Si_{10.55}Al_{1.45}O_{0.9}N_{15.1}$ | TiC | 18.9 |
| 83 | $Ca_{0.5}Si_{10.55}Al_{1.45}O_{0.9}N_{15.1}$ | SiC | 20.1 |

The results show that Sample Nos. 80 to 83, each in which the sintered compact contains TiN, TiCN, TiC, or SiC, exhibited Vickers hardnesses Hv of 18.9 GPa or more, thus showing a tendency to increase hardness.

Reference Signs List

1:    main phase
2:    sub phase
3:    grain boundary phase

**Claims**

1. A sialon sintered compact comprising a main phase made of $\alpha$-sialon, and a sub phase made of $\beta$-sialon, wherein the molar concentration of aluminum in the $\beta$-sialon is higher than the molar concentration of aluminum in the $\alpha$-sialon.

2. The sialon sintered compact according to Claim 1, wherein the molar concentration of aluminum in the $\beta$-sialon is 1.3 times or more the molar concentration of aluminum in the $\alpha$-sialon.

3. The sialon sintered compact according to Claim 1 or 2, wherein the molar concentration of aluminum in the $\alpha$-sialon is in the range of 5% by mole to 10% by mole.

4. The sialon sintered compact according to any one of Claims 1 to 3, wherein the $\alpha$-sialon contains a rare-earth element or calcium dissolved therein with a molar concentration in the range of 1% by mole to 3% by mole.

5. The sialon sintered compact according to any one of Claims 1 to 4, wherein the main phase accounts for 60% to 90% of the area of a predetermined region of the sintered compact in sectional view.

6. The sialon sintered compact according to any one of Claims 1 to 5, wherein the sintered compact contains at least one of titanium nitride, titanium carbide, titanium carbonitride, and silicon carbide.

7. The sialon sintered compact according to Claim 6, wherein the total area of the grains of the titanium nitride, the titanium carbide, and the silicon carbide accounts for 1.0% to 45% of the area of a predetermined region of the sintered compact in sectional view.

8. A wear-resistant component comprising the sialon sintered compact as set forth in any one of Claims 1 to 7.

Fig.1( a )

Fig.1( b )

COMPRESSIVE FORCE F

COMPRESSIVE FORCE F

## INTERNATIONAL SEARCH REPORT

| International application No. |
|---|
| PCT/JP2013/067738 |

**A. CLASSIFICATION OF SUBJECT MATTER**
*C04B35/599(2006.01)i, F16C33/24(2006.01)i*

According to International Patent Classification (IPC) or to both national classification and IPC

**B. FIELDS SEARCHED**

Minimum documentation searched (classification system followed by classification symbols)
C04B35/599

Documentation searched other than minimum documentation to the extent that such documents are included in the fields searched
Jitsuyo Shinan Koho        1922-1996  Jitsuyo Shinan Toroku Koho  1996-2013
Kokai Jitsuyo Shinan Koho  1971-2013  Toroku Jitsuyo Shinan Koho  1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 62-275071 A  (Hitachi Metals, Ltd.),<br>30 November 1987 (30.11.1987),<br>page 1, right column; pages 2 to 3, examples<br>(Family: none) | 1-3,5,8<br>4,6,7 |
| X<br>A | JP 62-187175 A  (Hitachi Metals, Ltd.),<br>15 August 1987 (15.08.1987),<br>page 1, left column, Industrial Field of<br>Invention; page 2, examples; table 1<br>(Family: none) | 1-3,5,8<br>4,6,7 |
| X<br>A | JP 1-224271 A  (Hitachi Metals, Ltd.),<br>07 September 1989 (07.09.1989),<br>pages 3 to 4, example 2; table 2<br>(Family: none) | 1,2,4,5,8<br>3,6,7 |

☒ Further documents are listed in the continuation of Box C. ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 July, 2013 (19.07.13) | Date of mailing of the international search report<br>06 August, 2013 (06.08.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/067738

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 59-199579 A  (Mitsubishi Metal Corp.),<br>12 November 1984 (12.11.1984),<br>pages 4 to 5, example 1; table 1<br>& US 4547470 A           & DE 3414979 A<br>& DE 3414979 A1 | 1,2,6-8<br>3-5 |
| X<br>A | JP 6-56532 A  (Toyota Central Research and<br>Development Laboratories, Inc.),<br>01 March 1994 (01.03.1994),<br>paragraphs [0002], [0027], [0031]; table 1<br>(Family: none) | 1,2,5,8<br>3,4,6,7 |
| A | JP 58-185484 A  (Lucas Industries PLC),<br>29 October 1983 (29.10.1983),<br>page 8, upper left column, line 7 to page 9,<br>lower left column, line 5; tables 1, 2<br>& US 4506020 A           & EP 87888 A2<br>& DE 3363991 D           & MX 159486 A<br>& AT 20336 E             & AU 1188183 A<br>& CA 1200257 A           & AT 20336 T<br>& AU 555560 B | 1-8 |

Form PCT/ISA/210 (continuation of second sheet) (July 2009)

**EP 2 891 640 A1**

**Patent documents cited in the description**

- JP 2233560 A